# EUROPEAN PATENT SPECIFICATION

(11) **EP 2 639 263 B1**
(45) Date of publication and mention of the grant of the patent: **25.02.2015**
(21) Application number: 12180608.7
(22) Date of filing: 16.08.2012
(51) Int. Cl.: C08K 5/10, C08K 5/24

(54) **Resin composition and resin molded product**
Kunststoffzusammensetzung und Kunststoffformteil
Composition de résine et produit moulé en résine

(30) Priority: 16.03.2012 JP 2012060343
(43) Date of publication of application: 18.09.2013
(73) Proprietor: Fuji Xerox Co., Ltd., Minato-ku, Tokyo (JP)
(72) Inventor: Takimoto, Hitoshi, Ebina-shi, Kanagawa (JP); Wada, Takuya, Ebina-shi, Kanagawa (JP); Miyata, Daisuke, Ebina-shi, Kanagawa (JP)
(74) Representative: Lewin, David Nicholas

(56) References cited:
- JP-A- 2003 049 076

## Description

### BACKGROUND

### 1. Field

The present invention relates to a resin composition and a resin molded product.

### 2. Description of the Related Art

In the related art, as a thermoplastic resin used in the molding of a resin molded product and as a thermoplastic resin composition used in the formation of a resin molded product, various thermoplastic resin materials are provided.

For example, in order to improve impact resistance strength and surface impact strength, a method for adding polylactic acid or titanium oxide to a polycarbonate resin has been suggested (see, for example, Japanese Patent Application Laid-Open No. 2009-144075).

In order to improve various properties, adding fillers and the like other than resins has been suggested. For example, it has been suggested that condensed phosphoric acid, metal stearate salt, polylactic acid or talc is added in order to improve mechanical characteristics, heat resistance and flame retardancy (see, for example, Japanese Patent Application Laid-Open No. 2009-126870), and silicon dioxide or aluminum oxide is added in order to improve flame retardancy (see, for example, Japanese Patent Application Laid-Open No. 2008-001903).

Further, it has been suggested that antimony or germanium is added for the purpose of improving color tone and heat resistance (see, for example 4, Japanese Patent Application Laid-Open No. 2010-031175).

An object of the present invention is to provide a resin composition from which a resin molded product having excellent impact resistance and hiding property may be obtained

### SUMMARY

(1) A resin composition, including: a polycarbonate resin; a titanium compound; and a zinc compound, wherein a content Ct of the titanium element derived from the titanium compound is from 0.1% by mass to 5% by mass based on the total resin composition, and a content Cz of the zinc element derived from the zinc compound is from 0.2 ppm to 10 ppm based on the total resin composition.
(2) The resin composition according to (1), wherein a content of mercury element is 100 ppm or less based on the total resin composition.
(3) The resin composition according to (1) or (2), wherein a weight average molecular weight of the polycarbonate resin is from 5000 to 300000.
(4) The resin composition according to any one of (1) to (3), wherein a content of the polycarbonate resin is from 50% by mass to 90% by mass based on the total resin composition.
(5) The resin composition according to any one of (I) to (4), wherein a volume average diameter of the titanium compound is from 0.1 µm to 0.5 µm.
(6) The resin composition according to any one of (1) to (5), wherein the titanium compound is titanium oxide.
(7) The resin composition according to any one of (1) to (6), wherein the zinc compound is a zinc salt of acid.
(8) The resin composition according to any one of (1) to (7), wherein the zinc salt of acid contains at least one of zinc phosphate and zinc stearate.
(9) The resin composition according to any one of (1) to (8), wherein the content Ct of the titanium element derived from the titanium compound is from 0.1 % by mass to 2% by mass based on the total resin composition, and the content Cz of the zinc element derived from the zinc compound is from 0.2 ppm to 5 ppm based on the total resin composition.
(10) The resin composition according to any one of (1) to (9), wherein the content Ct of the titanium element derived from the titanium compound is from 0.1 % by mass to 1% by mass based on the total resin composition, and the content Cz of the zinc element derived from the zinc compound is from 0.2 ppm to 2 ppm based on the total resin composition.
(11) A resin molded product, including: the resin composition according to any one of (1) to (10).

According to exemplary embodiments recited in claims 1, 6, 7 and 8, a resin composition including a polycarbonate resin, a titanium compound and a zinc compound may be provided, in which the resultant resin molded product has excellent impact resistance and hiding property, as compared with the case where the content Ct of the titanium element derived from the titanium compound or the content Cz of the zinc element derived from the zinc compound is not within the range.

According to an exemplary embodiment recited in claim 2, a resin composition may be provided, in which the color change over elapsed time of the resultant resin molded product is suppressed, as compared with the case where mercury element is contained in an amount of more than 100 ppm based on the total resin composition.

According to exemplary embodiments recited in claims 3, 4 and 5, a resin composition, in which the resultant resin molded product has excellent impact resistance and hiding property, as compared with the case not having the above constitutions.

According to an exemplary embodiment recited in claims 9, a resin composition, in which the resultant resin molded product has more excellent impact resistance and hiding property, as compared with the case where the content Ct of the titanium element derived from the titanium compound or the content Cz of the zinc element derived from the zinc compound is not within the range.

According to an exemplary embodiment recited in claim 10, a resin composition, in which the resultant resin molded product has even excellent impact resistance and hiding property, as compared with the case where the content Ct of the titanium element derived from the titanium compound or the content Cz of the zinc element derived from the zinc compound is not within the range.

According to exemplary embodiments recited in claim 11, a molded product including a resin composition including a polycarbonate resin, a titanium compound and a zinc compound may be provided, in which the resin molded product has excellent impact resistance and hiding property, as compared with the case not having the above constitutions.

### BRIEF DESCRIPTION OF DRAWINGS

Exemplary embodiments of the present invention will be described in detail based on the following figure, wherein:

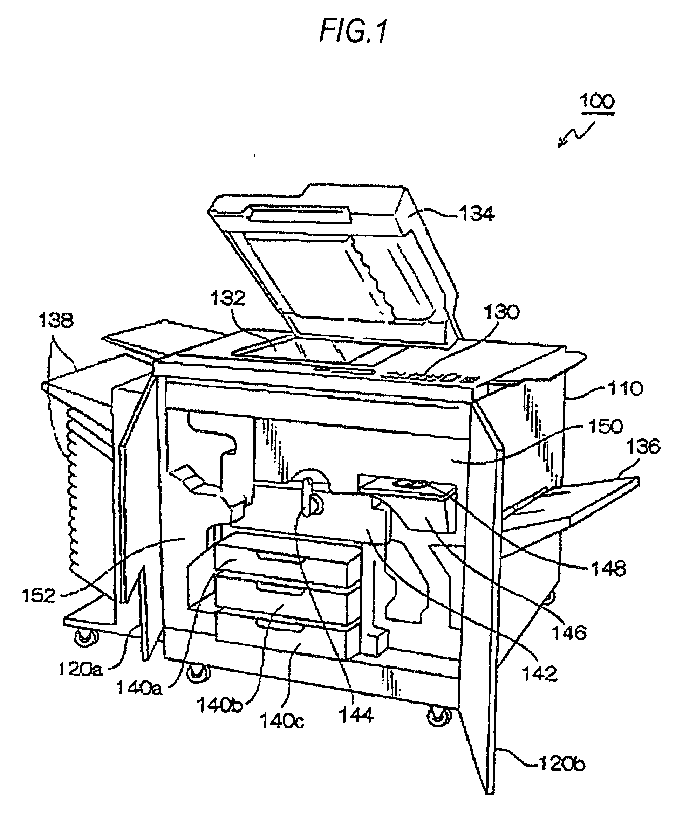

FIG. 1 is a schematic view illustrating an exemplary example of electric and electronic parts including a resin molded product relating to the exemplary embodiment.

### DETAILED DESCRIPTION OF EXEMPLARY EMBODIMENTS

Hereinafter, the exemplary embodiment which is an example of the present invention will be described.

### [Resin Composition]

A resin composition relating to the exemplary embodiment includes polycarbonate, a titanium compound and a zinc compound.

The content Ct of the titanium element derived from the titanium compound is from 0.1% by mass to 5% by mass based on the total resin composition.

The content Cz of the zinc element derived from the zinc compound is from 0.2 ppm to 10 ppm based on the total resin composition.

In the related art, polycarbonate resins are known as a material having high impact resistance. Further, polycarbonate resins are not poor even in colorability, and thus, have been widely used as a material for obtaining a resin molded product.

Meanwhile, the titanium compound representing titanium oxide is known as a material for obtaining a white resin molded product having high hiding property.

Since the dispersibility of the titanium compound in the polycarbonate resin is not always good, aggregates of the titanium compound are produced in the resin, and impact resistance tends to be reduced in portions where the aggregates are present in large amounts. When aggregates of the titanium compound are produced in the resin, the hiding property of the resultant resin molded product may be reduced.

For this reason, when the blending amount of the titanium compound increases, the hiding property thereof is improved, but the dispersiblity of the titanium compound is further deteriorated and the impact resistance thereof tends to be further deteriorated. In addition, when increasing the mechanical dispersion force in order to improve the dispersibility of the titanium compound, the dispersibility is improved, but the impact resistance of the resultant resin molded product is reduced in some cases because the molecular chains of the polycarbonate resin tend to be cut.

In particular, when a polycarbonate resin is mixed with a resin other than the polycarbonate resin, the titanium compound is easily present at the interface of these resins, and as a result, the dispersibility of the titanium compound is further deteriorated, and the impact resistance is also deteriorated in some cases.

Thus, for the resin composition relating to the exemplary embodiment, in a system including a polycarbonate resin, a titanium compound is blended such that the content Ct of the titanium element derived from the titanium compound is in the above range, and simultaneously a zinc compound is blended such that the content of the zinc element derived from the zinc compound is in the above range.

By the composition, the resin composition relating to the exemplary embodiment is obtained, in which the resultant molded product has excellent impact resistance and hiding property. The reason is not clearly elucidated, but it is thought to be due to the reason described below.

Initially, titanium compounds generally have a property that charging is hardly generated. In contrast, as zinc compounds exhibit a strong positive charging property, it is considered that the titanium compound is more negatively charged due to the presence of a small amount of the zinc compound within the range, and the aggregating property is reduced by electrical repulsion between titanium compounds. At the same time, as the dispersed titanium compound is electrically attracted to a small amount of the zinc compound, it is considered that the dispersibility of the titanium compound is improved by the presence of the zinc compound.

The reason why the amount of the zinc compound is small with respect to the titanium compound is believed that, as described above, the zinc compound is easily positively charged, and thus, a small amount thereof is enough to render the titanium compound negatively charged.

Therefore, for a system including a polycarbonate resin, if the titanium compound is blended in such an amount that the resultant resin molded product achieves hiding property, and simultaneously the zinc compound is blended in a small amount, it is considered that the aggregating property of the titanium compound is reduced and the hiding property of the resultant resin molded product is enhanced while the impact resistance thereof is maintained.

As described above, it is thought that, by using the resin composition relating to the exemplary embodiment, it is possible to obtain a resin molded product which is excellent in impact resistance and hiding property.

Hereinafter, each compound of the resin composition relating to the exemplary embodiment will be described in detail.

### (Resin)

### - Polycarbonate resin -

Polycarbonate resins are not particularly limited, and examples thereof include polycarbonate resins having (-O-R-OCO-) as a repeating unit. R includes diphenylpropane, P-xylene and the like. -O-R-O is not particularly limited as long as the group is a dioxy compound.

Specific examples of polycarbonate resins include aromatic polycarbonates such as bisphenol A-type polycarbonate, bisphenol S-type polycarbonate and biphenyl-type polycarbonate.

The polycarbonate resin may be a copolymer with silicon or undecanoic acid amide.

The weight average molecular weight of the polycarbonate resin is not particularly limited, but preferably from 5,000 to 300,000, and more preferably from 10,000 to 200,000. When the weight average molecular weight of the polycarbonate resin is less than the range, the heat resistance of the resin molded product tends to be reduced. When the molecular weight exceeds the range, the impact resistance of the resin molded product tends to be reduced.

The content of the polycarbonate resin is preferably from 50% by mass to 90% by mass, and more preferably from 60% by mass to 90% by mass, based on the total resin composition. When the content of the polycarbonate resin is within the range, a desired impact resistance of a molded product tends to be realized.

### - Other resins -

Resins other than polycarbonate resins may be contained to such an extent that properties of the resin composition are not reduced.

Examples of other resins include aromatic polyester-based polymer compounds such as polyethylene terephthalate, polypropylene terephthalate, polybutylene terephthalate, polyethylene naphthalate, and copolymers thereof, polyarylate-based polymer compounds such as bisphenol A/terephthalic acid polyarylate, bisphenol S/terephthalic acid polyarylate, biphenyl/terephthalic acid polyarylate, bisphenol A/naphthalene dicarboxylic acid polyarylate, and copolymers thereof, acrylic polymer compounds such as polymethyl methacrylate, polybutyl methacrylate, polymethyl acrylate, polybutyl acrylate, and copolymers thereof, and polyamide-based polymer compounds such as ABS-based polymer compounds having various component ratios of each of acrylonitrile (A), butadiene (B) and styrene (S), 6-nylon, 6,6-nylon, and copolymers thereof.

### (Titanium compound)

As the titanium compound, titanium oxide is suitable from the viewpoint of high refractive index, hiding property of a resin molded product and enhancement of whiteness degree.

Examples of titanium oxide include titanium oxides such as a rutile type, an anatase type and a brookite type. Among them, as the titanium oxide, a rutile type titanium oxide is suitable from the viewpoint of high refractive index, hiding property of a resin molded product and enhancement of whiteness degree.

The titanium oxide may be subjected to surface treatment with hydrous oxide of aluminum or silicon prepared by a chlorine method. In this case, the combination of a polycarbonate resin with resins other than the polycarbonate resin is particularly advantageous in that the compatibility with the resin is enhanced.

Examples of methods for preparing titanium oxide include a method using a sulfuric acid method, including: dissolving ilmenite with sulfuric acid to separate impurities, and hydrolyzing titanyl sulfate to produce titanium oxide. As a specific example, ilmenite ore is first grounded and then reacted with sulfuric acid to convert the reactant into an aqueous sulfate. The aqueous solution containing titanyl sulfate is left to stand and filtered to remove impurities such as iron. Thereafter, the solution is precipitated to obtain insoluble and white titanium hydroxide by hydrolyzing titanyl sulfate with heating, and then the precipitate is neutrally washed, dried, sintered, and then ground. Through the process, titanium oxide particles may be obtained. The amount of mercury element contained in titanium oxide is reduced by increasing the number of times of the precipitation and neutral washing.

The volume average particle diameter of the titanium compound is preferably from 0.1 µm to 0.5 µm and more preferably from 0.2 µm to 0.3 µm.

When the volume average particle diameter of the titanium compound is less than the range, aggregation between titanium compounds easily occurs, and thus, the hiding property of the resin molded product tends to be reduced. When the volume average particle diameter of the titanium compound exceeds the range, the impact resistance strength tends to be reduced.

The volume average particle diameter of the titanium compound is measured by a laser diffraction type particle size distribution measuring apparatus (manufactured by Horiba, Ltd., LA-920).

The content Ct of the titanium element derived from the titanium compound is from 0.1% by mass to 5% by mass, preferably from 0.1% by mass to 2% by mass, and more preferably from 0.1% by mass to 1% by mass, based on the total resin composition.

When the content Ct of the titanium element is less than the range, the hiding property of the resin molded product is reduced. Meanwhile, when the content Ct of the titanium element exceeds the range, the impact resistance of the resin molded product is decreased.

In order to set the content Ct of the titanium element in the range, for example, the content is from 0.18% by mass to 8.8% by mass, preferably from 0.18% by mass to 3.5% by mass, and more preferably from 0.18% by mass to 1.8% by mass, based on the total resin composition, in terms of the content of titanium oxide as the titanium compound.

### (Zinc compound)

Examples of the zinc compound include a zinc salt of acid, zinc oxide and the like.

Among them, as the zinc compound, a zinc salt of acid is suitable from the viewpoint of improving the impact resistance and hiding property of the resin molded product.

Examples of the zinc salt of acid include zinc salts of inorganic acids such as zinc sulfate, zinc nitrate and zinc phosphate; zinc salts of aliphatic carboxylic acids such as zinc stearate, zinc oleate, zinc octoate and zinc palmitate; zinc salts of aromatic carboxylic acids such as zinc benzoate, zinc salicylate, 4-hydroxybenzoic acid zinc, 4-hydroxymethylbenzoic acid zinc and t-butylbenzoic acid zinc; and the like.

Among them, as the zinc salt of acid, zinc phosphate and zinc stearate are suitable from the viewpoint of suppressing the dispersibility of the titanium compound from being reduced and improving the impact resistance and hiding property of the resin molded product.

The content Cz of the zinc element derived from the zinc compound is from 0.2 ppm to 10 ppm, preferably from 0.2 ppm to 5 ppm and more preferably from 0.2 ppm to 2 ppm, based on the total resin composition.

When the content Cz of the zinc element is less than the range or exceeds the range, the aggregation of the titanium compound easily occurs, thereby reducing the hiding property of the resin molded product.

In order to set the content Cz of the zinc element in the range, for example, in terms of the content of zinc phosphate as the zinc compound, the content is from 0.39 ppm to 20 ppm (preferably from 0.39 ppm to 9.8 ppm), and in terms of the content of zinc stearate as the zinc compound, the content is from 1.9 ppm to 95 ppm (preferably from 1.9 ppm to 48 ppm), based on the total resin composition.

### (Other components)

The resin composition relating to the exemplary embodiment may include other components.

Examples of other components include a compatibilizer, a plasticizer, an antioxidant, a release agent, a light fastness agent, a weathering agent, a coloring agent, a pigment, a modifier, an antistatic agent, a hydrolysis resistant agent, a filler, a reinforcing agent (glass fiber, carbon fiber, talc, clay, mica, glass flake, milled glass, glass beads, crystalline silica, alumina, silicon nitride, alumina nitride, boron nitride and the like) and the like.

The content of other components is suitably from 0% by mass to 10% by mass, and preferably from 0% by mass to 5% by mass, based on the total resin composition. Herein, "0% by mass" means that the amount of the other components is below the detection limit.

### (Characteristics of resin composition)

The resin composition relating to the exemplary embodiment preferably has a mercury element content of 100 ppm or less, based on the total resin composition. That is, it is preferred that the content of mercury element is reduced to 100 ppm or less, based on the total resin composition.

Herein, mercury element is likely to be present, for example, as an impurity of a catalyst during polymerization of a resin or an impurity of titanium oxide during production of titanium oxide. As the impurity thereof, mercury element is contained in the resin composition. Mercury element may be present in such a form as an oxide, carbonate or an amalgam with a metal, but the colors thereof are not always the same, and besides, are changed over elapsed time in some cases. As a result, a desired color (for example, white color by titanium oxide) may be changed over elapsed time in some cases. In particular, when the resin molded product is recycled, there is a case in which the difference caused by the color change is easily recognized.

For this reason, when the content of mercury element is within the range, the color change over elapsed time of the resultant resin molded product is suppressed. As a result, even when the resin molded product is recycled, it is easy to obtain a recycled resin molded product with the color change suppressed.

It is better that the content of mercury element is maintained as low as possible, and, for example, preferably 50 ppm or less, and more preferably 20 ppm or less.

In order to set the content of mercury element within the range, an exemplary method of preparing titanium oxide of the titanium compound include steps of: increasing the number of precipitations and neutral washings to decrease the amount of mercury element in titanium oxide; and blending the titanium oxide with a resin composition. Examples thereof also include a step of reducing the amount of a catalyst during polymerization of a resin.

### (Preparation method of resin composition)

The resin composition relating to the exemplary embodiment is prepared by melt-kneading each of the components.

Herein, as a melt-kneading unit, a known unit may be used, and examples thereof include a twin-screw extruder, a Henschel mixer, a Banbury mixer, a single screw extruder, a multi-screw extruder, a co-kneader and the like.

### [Resin molded product]

A resin molded product relating to the exemplary embodiment is configured by including the resin composition relating to the exemplary embodiment. Specifically, the resin molded product relating to the exemplary embodiment is obtained by molding the resin composition relating to the exemplary embodiment.

The resin composition relating to the exemplary embodiment may be molded by a molding method such as, for example, injection molding, extrusion molding, blow molding, heat press molding, calender molding, coating molding, cast molding, dipping molding, vacuum molding and transfer molding to obtain the resin molded product relating to the exemplary embodiment.

Herein, the molding temperature (for example, extrusion temperature and melt temperature) of the resin composition relating to the exemplary embodiment may be, for example, from 180°C to 230°C.

Injection molding may be performed by using a commercially available apparatus such as, for example, NEX 500, NEX 150 and NEX 70000 manufactured by Nissei Plastic Industrial, SE50D manufactured by Toshiba Machine Co., Ltd. At this point, the cylinder temperature is preferably in a range of from 170°C to 230°C, and more preferably in a range of from 180°C to 230°C from the viewpoint of suppressing the decomposition of the resin. The mold temperature is preferably in a range of from 30°C to 100°C and more preferably in a range of from 30°C to 60°C from the viewpoint of productivity.

The resin molded product relating to the exemplary embodiment is suitably used in electric and electronic devices, home electric appliances, containers, automotive interior materials and the like. More specific examples thereof include cases for home electric appliances, electronic and electric devices and the like, various parts and the like, wrapping films, storage cases for CD-ROM, DVD and the like, tableware, food trays, beverage bottles, chemical wrapping materials and the like, and among them, the resin molded product is appropriate for parts of electronic and electric devices.

FIG. 1 is an external perspective view of an image forming apparatus, which is an example of parts of an electronic and electric device provided with the molded product relating to the exemplary embodiment, when viewed from the front side thereof.

An image forming apparatus 100 of FIG. 1 is provided with front covers 120a and 120b in front of a main product apparatus 110. These front covers 120a and 120b are openable and closable such that an operator may manipulate inner parts of the apparatus. Accordingly, the operator replenishes a toner when the toner is consumed, exchanges a consumed process cartridge, or removes clogged papers when jamming occurs in the apparatus. FIG. 1 illustrates the apparatus in a state where the front covers 120a and 120b are opened.

An operation panel 130 to which various conditions relating to image formation, such as a paper size or the number of copies are input by the operation of the operator, and a copy glass 132 on which an original copy to be read off is disposed are provided on the upper surface of the main product apparatus 110. The main product apparatus 110 is provided with, on the upper portion thereof, an automatic original copy conveying apparatus 134 that conveys the original copy on the copy glass 132. The main product apparatus 110 is provided with an image reading apparatus that obtains image data showing an image on the original copy by scanning the image on the original copy disposed on the copy glass 132. The image data obtained by the image reading apparatus are sent to an image forming unit through a control part. The image reading apparatus and the control part are housed in a case 150 constituting a part of the main product apparatus 110. The image forming unit is provided in the case 150 as a detachable process cartridge 142. The process cartridge 142 may be detached and attached by turning an operation lever 144.

A toner storage part 146 is attached to the case 150 of the main product apparatus 110, and a toner is replenished from a toner supply port 148. The toner housed in the toner storage part 146 is supplied to a development apparatus.

Meanwhile, paper storage cassettes 140a, 140b and 140c are provided on the bottom part of the main product apparatus 110. A plurality of conveying rollers composed of a pair of rollers are arranged in the main product apparatus 110, and thus, a conveying path is formed where papers in the paper storage cassettes are conveyed to the image forming unit located at the upper part thereof. Also, paper in each paper storage cassette is ejected one by one by a paper eject mechanism disposed in the vicinity of the end of the conveying path, and is sent out to the conveying path. A manual paper supply part 136 is provided at the side of the main product apparatus 110, and paper is also supplied therefrom.

The paper having an image formed thereon by the image forming unit is successively transported between two fixing rolls mutually in contact and supported by a case 152 constituting a part of the main product apparatus 110, and then paper-ejected to the outside of the main product apparatus 110. The main product apparatus 110 is provided with a plurality of paper discharge parts 138 at the opposite side of the side at which the paper supply part 136 is provided, and papers after image formation are discharged to these paper discharge parts.

In the image forming apparatus 100, the resin molded product relating to the exemplary embodiment is used in, for example, the front covers 120a and 120b, an exterior of the process cartridge 142, the case 150 and the case 152.

### EXAMPLE

Hereinafter, the present invention will be described in detail with reference to Examples, but the present invention is not limited thereto. "Parts" represents "parts by mass" unless otherwise specified.

Herein, the volume average particle diameter of titanium oxide is measured by using a laser diffraction type particle size distribution measuring apparatus (LA-700: manufactured by Horiba, Ltd.). As a measuring method, a sample which is present as a liquid dispersion is adjusted to have solid content of about 2 g, and ion-exchanged water is added thereto up to about 40 ml. This is then introduced into a cell until an appropriate concentration is obtained, the solution is allowed to stand for about 2 min, and measurement is performed after the concentration in the cell unit is almost stabilized. The volume average particle diameter for each channel obtained is accumulated from a small volume average particle diameter side, and a particle diameter at 50% accumulation is adopted as a volume average particle diameter.

When hydrophobicized titanium oxide is measured, 2 g of a measurement sample is added to 50 ml of a surfactant, preferably a 5% aqueous solution of sodium alkylbenzene sulfonate, and followed by dispersion in an ultrasonic disperser (1,000 Hz) for 2 min to prepare a sample, and measurement is performed in the same manner as in the above-described liquid dispersion.

### <Preparation of titanium oxide>

### (Preparation of titanium oxide 1)

100 parts of ilmenite ore are dissolved with 900 parts of sulfuric acid to generate titanyl sulfate. This is extracted from water and cooled to separate iron. This is hydrolyzed with heating to generate a sulfuric acid liquid dispersion of titanium hydroxide. Next, this is filtered, and as process A, the filtrate is dispersed with 300 parts of water, and the pH is adjusted to 3 by adding sulfuric acid thereto. Thereafter, as process B, filtration is performed, and the pH is adjusted to 7 by using sodium hydroxide. Thereafter, as process C, filtration is performed. These processes A to C are repeated five times. Thereafter, sintering at 450°C, and grinding after cooling are performed to prepare titanium oxide 1 having a volume average particle diameter of 0.1 µm is prepared.

### (Preparation of titanium oxide 2)

10 parts of titanium oxide 1 and 2 parts of isobutyl trimethoxy silane are added to ethanol, the mixture is heated, the solvent is distilled off, and then the resulting mixture is heated at 120°C for 1 hour and cooled, and then subjected to grinding with a jet mill to prepare titanium oxide 2 having a volume average particle diameter of 0.1 µm.

### (Preparation of titanium oxide 3)

Titanium oxide 3 is prepared in the same manner as in titanium oxide 2, except that processes A to C for preparing titanium oxide 1 are performed four times in the preparation of titanium oxide 2.

### (Preparation of titanium oxide 4)

Titanium oxide 4 is prepared in the same manner as in titanium oxide 2, except that processes A to C for preparing titanium oxide are performed twice in the preparation of titanium oxide 2.

### (Preparation of titanium oxide 5)

Titanium oxide 5 is preparation in the same manner as in titanium oxide 2, except that processes A to C for preparing titanium oxide are performed once in the preparation of titanium oxide 2.

### <Preparation of resin composition>

### (Preparation of resin composition 1)

A previously kneaded component of 100 parts of a polycarbonate resin (PC resin): "Iupilon H-3000" (manufactured by Mitsubishi Engineering-Plastics Corporation), 8.8 parts of titanium oxide 2 and 0.0052 part of zinc stearate (manufactured by Wako Pure Chemical Industries, Ltd.) is kneaded by using a biaxial kneading apparatus (manufactured by Toshiba Machine Co., Ltd., trade name "TEM-H"), and then cooled to obtain a kneaded mixture. The kneaded mixture is crushed, and as a post-added component, 810 parts of the polycarbonate resin (PC resin) and 81.2 parts of acrylonitrile/butadiene/styrene resin (ABS resin): "ABS 150" (manufactured by Techno Polymer Co.) arc added thereto, and the mixture is kneaded again and then cooled to obtain resin composition 1. The kneading is performed at a cylinder temperature of 230°C.

### (Preparation of resin composition 2)

Resin composition 2 is obtained in the same manner as in the preparation of resin composition 1, except that the amounts of PC resin and ABS resin, which are added later in the preparation of resin composition 1, are changed into 790 parts and 101.2 parts, respectively.

### (Preparation of resin composition 3)

Resin composition 3 is obtained in the same manner as in the preparation of resin composition 1, except that the amounts of PC resin and ABS resin, which are added later in the preparation of resin composition 1, are changed into 510 parts and 381.2 parts, respectively.

### (Preparation of resin composition 4)

Resin composition 4 is obtained in the same manner as in the preparation of resin composition 1, except that the amounts of PC resin and ABS resin, which are added later in the preparation of resin composition 1, are changed into 490 parts and 401.2 parts, respectively.

### (Preparation of resin composition 5)

Resin composition 4 is obtained in the same manner as in the preparation of resin composition 1, except that the amounts of PC resin and ABS resin, which are added later in the preparation of resin composition 1, are changed into 415 parts and 476.2 parts, respectively.

### (Preparation of resin composition 6)

Resin composition 6 is obtained in the same manner as in the preparation of resin composition 1, except that the amounts of PC resin and ABS resin, which are added later in the preparation of resin composition 1, are changed into 390 parts and 501.2 parts, respectively.

### (Preparation of resin composition 7)

Resin composition 7 is obtained in the same manner as in the preparation of resin composition 1, except that titanium oxide 2 is changed into titanium oxide 3 in the preparation of resin composition 1.

### (Preparation of resin composition 8)

Resin composition 8 is obtained in the same manner as in the preparation of resin composition 1, except that titanium oxide 2 is changed into titanium oxide 4 in the preparation of resin composition 1.

### (Preparation of resin composition 9)

Resin composition 9 is obtained in the same manner as in the preparation of resin composition 1, except that titanium oxide 2 is changed into titanium oxide 5 in the preparation of resin composition 1.

### (Preparation of resin composition 10)

Resin composition 10 is obtained in the same manner as in the preparation of resin composition 7, except that the amounts of titanium oxide 3 and ABS resin which is added later in the preparation of resin composition 7 are changed into 16.8 parts and 73.2 parts, respectively.

### (Preparation of resin composition 11)

Resin composition 11 is obtained in the same manner as in the preparation of resin composition 8, except that the amounts of titanium oxide 4 and ABS resin which is added later in the preparation of resin composition 8 are changed into 16.8 parts and 73.2 parts, respectively.

### (Preparation of resin composition 12)

Resin composition 12 is obtained in the same manner as in the preparation of resin composition 9, except that the amounts of titanium oxide 5 and ABS resin which is added later in the preparation of resin composition 9 are changed into 16.8 parts and 73.2 parts, respectively.

### (Preparation of resin composition 13)

Resin composition 13 is obtained in the same manner as in the preparation of resin composition 1, except that ABS resin which is added later in the preparation of resin composition I is changed into an aromatic polyester resin: "VYLOPET EMC405A" (manufactured by Toyobo Co., Ltd.).

### (Preparation of resin composition 14)

Resin composition 14 is obtained in the same manner as in the preparation of resin composition 1, except that ABS resin which is added later in the preparation of resin composition 1 is changed into a polypropylene resin: "NOVATEC PP" (manufactured by Japan Polypropylene Corporation).

### (Preparation of resin compositions 15 to 40)

Resin compositions 15 to 40 are prepared in the same manner as in resin composition 1, except that PC resin, ABS resin, titanium oxide and zinc stearate have the same compositions as shown in Table 1.

### (Preparation of resin compositions 41 to 67)

Resin compositions 41 to 67 are prepared in the same manner as in resin composition 1, except that PC resin, ABS resin, titanium oxide and zinc phosphate (manufactured by Wako Pure Chemical Industries, Ltd.) have the same compositions as shown in Table 2.

### (Preparation of resin compositions 68 to 94)

Resin compositions 68 to 94 are prepared in the same manner as in resin composition 1, except that PC resin, ABS resin, titanium oxide and zinc sulfate (manufactured by Wako Pure Chemical Industries, Ltd.) have the same compositions as shown in Table 3.

### (Preparation of resin composition 95)

910 parts of PC resin: "lupilon H-3000" (manufactured by Mitsubishi Engineering-Plastics Corporation), 81.2 parts of ABS resin: "ABS150" (manufactured by Techno Polymer Co.), 8.8 parts of titanium oxide 2 and 0.0052 part of zinc stearate (manufactured by Wako Pure Chemical Industries, Ltd.) are kneaded by using a biaxial kneading apparatus (manufactured by Toshiba Machine Co., Ltd., trade name "TEM-H"), and then cooled to obtain a kneaded mixture. Kneading is performed at a cylinder temperature of 230°C.

### <Examples 1 to 71 and Comparative Examples 1 to 24>

For each resin composition 1 to composition 94, the following measurement and evaluation are performed. The results are shown in Table 4 to Table 6.

### (Measurement of content of each element in each resin composition)

In each resin composition, the content Ct of the titanium element, the content Cz of the zinc element and the content of mercury element are measured.

The desired contents of elements in each resin composition are quantitatively measured by using a fluorescent X-ray analysis.

Hereinafter, the quantification method of element contents using a fluorescent X-ray analysis will be described.

First, the preparation of a sample for measurement is performed as follows.

A sample of the resin composition is determined by the collimator size of the fluorescent X-ray apparatus, and prepared to have a size larger than the X-ray irradiated area and smaller than the sample stage. The thickness of the sample of the resin composition is set to be in a range of from 5 mm to 10 mm in addition to a saturated thickness for the X-ray. When the schematic form, thickness and surface shape of the sample are not uniform, molding treatment is performed in a disk type by press molding after grinding in a grinding treatment (vibration mill, mortar and the like).

As the fluorescent X-ray analysis apparatus, any apparatus of an energy dispersion type and a wavelength dispersion type may be used, but an energy dispersion-type fluorescent X-ray analysis apparatus EDX720 (manufactured by Shimadzu Corp.) is used in the present Example.

For measurement conditions, rhodium is used as the anode in a tube bulb, voltage is set as 50 kV, and a calibration curve method is selected as a quantification technique.

The standard sample registered to the calibration curve is selected from certified reference materials which are close to the specific weight of a matrix resin in a target constituent material.

In preparation of the calibration curve, a relationship between the certified value (weight ratio) of the reference material and a ratio of an X-ray strength in a target element analysis line or an X-ray strength calibrated with a background strength or a characteristic X-ray strength is registered as a calibration curve formula.

### [Charpy impact resistance strength]

Each resin composition is subjected to extrusion molding at a cylinder temperature of 220°C and a mold temperature of 50°C by using an injection molding machine (manufactured by Nissei Resin Industry Co., trade name "NEX5000"), and ISO multi-purpose dumbbell test specimens (test specimens corresponding to ISO527 tensile test and ISO178 bending test, test part thickness 4 mm and width 10 mm) are prepared.

The obtained ISO multi-purpose dumbbell test specimens are subjected to notch fabrication, and the Charpy impact resistance strength (kJ/m²) is measured by an impact resistance test apparatus (manufactured by Toyo Seiki, DG-C) in accordance with a method stipulated in ISO-179.

The evaluation criteria are as follows.
G 4: 10 kJ/cm² or more
G3: 5 kJ/cm² or more and less than 10 kJ/cm²
G 2: 2 kJ/cm² or more and less than 5 kJ/cm²
G 1: less than 2 kJ/cm²

### (Hiding property]

Each resin composition is subjected to extrusion molding at a cylinder temperature of 220°C and a mold temperature of 50°C by using an injection molding machine (manufactured by Nissei Resin Industry Co., trade name "NEX 5000") to prepare a resin sheet.

At one side, a transparent film is manufactured with an image formed thereon in such a manner that 30 characters of "A" having a vertical and horizontal size of 3 mm are disposed in a line and arranged in 30 rows.

The resin sheet is put on the image of the transparent film manufactured, set on a tracing board and irradiated from the rear side of the transparent film by using a fluorescent light, to confirm whether the character of "A" on the transparent film is readable through the resin sheet.

The evaluation criteria are as follows.
G 4: Unable to confirm the character at all.
G 3: Able to confirm something like characters.
G 2: Able to recognize something like characters on the whole, but illegible.
G 1: Able to recognize any one of the characters as "A".

### [Recycling property]

The resin sheet manufactured for evaluating hiding property is processed, and the degree of color change is confirmed under irradiation of UV light. A sunshine weather meter for light fastness test (manufactured by Suga Test Instruments Co., Inc. WEL-SUN-HC) is used as a light source for irradiating UV light to perform the evaluation under conditions of irradiation strength: 1,000 W, irradiation time: 120 hour, temperature: 60°C, humidity: 50% RH and distance from the light source: 100 mm. After the irradiation test, the color is compared with the color of the resin sheet before the irradiation.

The evaluation criteria are as follows.
G 4: Unable to confirm the difference in color.
G 3: A slight difference in color partially acknowledged.
G 2: A slight difference in color entirely acknowledged.
G 1: A clear difference in color acknowledged.

**Table 1**

| | Component which is kneaded previously (previously kneaded component) | | | | Component which is added later (post-added component) | |
|---|---|---|---|---|---|---|
| | Content of PC resin (part) | Kind of titanium oxide | Content of titanium oxide (part) | Content of zinc stearate (part) | Content of PC resin (part) | Content of ABS resin (part) |
| Resin composition 15 | 100 | 2 | 1.9 | 0.002 | 810 | 88.1 |
| Resin composition 16 | 100 | 2 | 16.8 | 0.002 | 810 | 73.2 |
| Rcsin composition 17 | 100 | 2 | 1.9 | 0.0183 | 810 | 88.1 |
| Resin composition 18 | 100 | 2 | 16.8 | 0.0183 | 810 | 73.2 |
| Resin composition 19 | 100 | 2 | 19.3 | 0.002 | 810 | 70.7 |
| Resin composition 20 | 100 | 2 | 34.2 | 0.002 | 810 | 55.8 |
| Resin composition 21 | 100 | 2 | 19.3 | 0.0183 | 810 | 70.7 |
| Resin composition 22 | 100 | 2 | 1.9 | 0.0196 | 810 | 88.1 |
| Resin composition 23 | 100 | 2 | 16.8 | 0.0196 | 810 | 73.2 |
| Resin composition 24 | 100 | 2 | 1.9 | 0.0471 | 810 | 88.1 |
| Resin composition 25 | 100 | 2 | 34.2 | 0.0471 | 810 | 55.8 |
| Resin composition 26 | 100 | 2 | 35.8 | 0.002 | 810 | 54.2 |
| Resin composition 27 | 100 | 2 | 86.7 | 0.002 | 700 | 113.3 |
| Resin composition 28 | 100 | 2 | 35.8 | 0.0471 | 810 | 54.2 |
| Resin composition 29 | 100 | 2 | 1.9 | 0.0483 | 810 | 88.1 |
| Resin composition 30 | 100 | 2 | 34.2 | 0.0483 | 810 | 55.8 |
| Resin composition 31 | 100 | 2 | 1.9 | 0.0931 | 810 | 88.0 |
| Resin composition 32 | 100 | 2 | 86.7 | 0.0931 | 700 | 113.2 |
| Resin composition 33 | 100 | 2 | 1.9 | 0.0017 | 810 | 88.1 |
| Resin composition 34 | 100 | 2 | 86.7 | 0.0017 | 700 | 113.3 |
| Resin composition 35 | 100 | 2 | 89.3 | 0.002 | 700 | 110.7 |
| Resin composition 36 | 100 | 2 | 89.3 | 0.0931 | 700 | 110.6 |
| Resin composition 37 | 100 | 2 | 1.9 | 0.0972 | 810 | 88.0 |
| Resin composition 38 | 100 | 2 | 86.7 | 0.0972 | 700 | 113.2 |
| Resin composition 39 | 100 | 2 | 1.6 | 0.002 | 810 | 88.4 |
| Resin composition 40 | 100 | 2 | 1.6 | 0.0931 | 810 | 88.3 |

**Table 2**

| | Component which is kneaded previously (previously kneaded component) | | | | Component which is added later (post-added component) | |
|---|---|---|---|---|---|---|
| | Content of PC resin (part) | Kind of titanium oxide | Content of titanium oxide (part) | Content of zinc stearate (part) | Content of PC resin (part) | Content of ABS resin (part) |
| Resin composition 41 | 100 | 2 | 8.8 | 0.001.1 | 810 | 81.2 |
| Resin composition 42 | 100 | 2 | 1.9 | 0.0005 | 810 | 88.1 |
| Resin composition 43 | 100 | 2 | 16.8 | 0.0005 | 810 | 73.2 |
| Resin composition 44 | 100 | 2 | 1.9 | 0.0038 | 810 | 88.1 |
| Resin composition 45 | 100 | 2 | 16.8 | 0.0038 | 810 | 73.2 |
| Resin composition 46 | 100 | 2 | 19.3 | 0.0005 | 810 | 70.7 |
| Rcsin composition 47 | 100 | 2 | 34.2 | 0.0005 | 810 | 55.8 |
| Resin composition 48 | 100 | 2 | 19.3 | 0.0038 | 810 | 70.7 |
| Resin composition 49 | 100 | 2 | 1.9 | 0.0041 | 810 | 88.1 |
| Resin composition 50 | 100 | 2 | 16.8 | 0.0041 | 810 | 73.2 |
| Resin composition 51 | 100 | 2 | 1.9 | 0.0097 | 810 | 88.1 |
| Resin composition 52 | 100 | 2 | 34.2 | 0.0097 | 810 | 55.8 |
| Resin composition 53 | 100 | 2 | 35.8 | 0.0005 | 810 | 54.2 |
| Resin composition 54 | 100 | 2 | 86.7 | 0.0005 | 700 | 113.3 |
| Resin composition 55 | 100 | 2 | 35.8 | 0.0097 | 810 | 54.2 |
| Resin composition 56 | 100 | 2 | 1.9 | 0.01 | 810 | 88.1 |
| Resin composition 57 | 100 | 2 | 34.2 | 0.01 | 810 | 55.8 |
| Resin composition 58 | 100 | 2 | 1.9 | 0.019 | 810 | 88.1 |
| Resin composition 59 | 100 | 2 | 86.7 | 0.019 | 700 | 113.3 |
| Resin composition 60 | 100 | 2 | 1.9 | 0.00035 | 810 | 88.1 |
| Resin composition 61 | 100 | 2 | 86.7 | 0.00035 | 700 | 113.3 |
| Resin composition 62 | 100 | 2 | 89.3 | 0.00041 | 700 | 110.7 |
| Resin composition 63 | 100 | 2 | 89.3 | 0.0191 | 700 | 110.7 |
| Resin composition 64 | 100 | 2 | 1.9 | 0.0199 | 810 | 88.1 |
| Resin composition 65 | 100 | 2 | 86.7 | 0.0199 | 700 | 113.3 |
| Resin composition 66 | 100 | 2 | 1.6 | 0.00041 | 810 | 88.4 |
| Resin composition 67 | 100 | 2 | 1.6 | 0.0191 | 810 | 88.4 |

**Table 3**

| | Component which is kneaded previously (previously kneaded component) | | | | Component which is added later (post-added component) | |
|---|---|---|---|---|---|---|
| | Content of PC resin (part) | Kind of titanium oxide | Content of titanium oxide (part) | Content of zinc stearate (part) | Content of PC resin (part) | Content of ABS resin (part) |
| Resin composition 68 | 100 | 2 | 8.8 | 0.0014 | 810 | 81.2 |
| Resin composition 69 | 100 | 2 | 1.9 | 0.0006 | 810 | 88.1 |
| Resin composition 70 | 100 | 2 | 16.8 | 0.0006 | 810 | 73.2 |
| Resin composition 71 | 100 | 2 | 1.9 | 0.0047 | 810 | 88.1 |
| Resin composition 72 | 100 | 2 | 16.8 | 0.0047 | 810 | 73.2 |
| Resin composition 73 | 100 | 2 | 19.3 | 0.0006 | 810 | 70.7 |
| Resin composition 74 | 100 | 2 | 34.2 | 0.0006 | 810 | 55.8 |
| Resin composition 75 | 100 | 2 | 19.3 | 0.0047 | 810 | 70.7 |
| Resin composition 76 | 100 | 2 | 1.9 | 0.0051 | 810 | 88.1 |
| Resin composition 77 | 100 | 2 | 16.8 | 0.0051 | 810 | 73.2 |
| Resin composition 78 | 100 | 2 | 1.9 | 0.0121 | 810 | 88.1 |
| Resin composition 79 | 100 | 2 | 34.2 | 0.0121 | 810 | 55.8 |
| Resin composition 80 | 100 | 2 | 35.8 | 0.0006 | 810 | 54.2 |
| Resin composition 81 | 100 | 2 | 86.7 | 0.0006 | 700 | 113.3 |
| Resin composition 82 | 100 | 2 | 35.8 | 0.012 | 810 | 54.2 |
| Resin composition 83 | 100 | 2 | 1.9 | 0.0125 | 810 | 88.1 |
| Resin composition 84 | 100 | 2 | 34.2 | 0.0125 | 810 | 55.8 |
| Resin composition 85 | 100 | 2 | 1.9 | 0.024 | 810 | 88.1 |
| Resin composition 86 | 100 | 2 | 86.7 | 0.024 | 700 | 113.3 |
| Resin composition 87 | 100 | 2 | 1.9 | 0.00044 | 810 | 88.1 |
| Resin composition 88 | 100 | 2 | 86.7 | 0.00044 | 700 | 113.3 |
| Rcsin composition 89 | 100 | 2 | 89.3 | 0.0006 | 700 | 110.7 |
| Resin composition 90 | 100 | 2 | 89.3 | 0.024 | 700 | 110.7 |
| Resin composition 91 | 100 | 2 | 1.9 | 0.025 | 810 | 88.1 |
| Resin composition 92 | 100 | 2 | 86.7 | 0.025 | 700 | 113.3 |
| Resin composition 93 | 100 | 2 | 1.6 | 0.0006 | 810 | 88.4 |
| Resin composition 94 | 100 | 2 | 1.6 | 0.024 | 810 | 88.4 |

**Table 4**

| | Resin composition | Content of titanium element Ct(mass%) | Content of zinc element Cz(ppm) | Content of mercury element(ppm) | Impact resistance | Hiding property | Recycling property |
|---|---|---|---|---|---|---|---|
| Example 1 | 1 | 0.50 | 0.6 | 5 | G4 | G4 | G4 |
| Example 2 | 2 | 0.51 | 0.6 | 5 | G4 | G4 | G4 |
| Example 3 | 3 | 0.50 | 0.6 | 5 | G4 | G4 | G4 |
| Example 4 | 4 | 0.49 | 0.6 | 5 | G4 | G4 | G4 |
| Example 5 | 5 | 0.50 | 0.6 | 5 | G4 | G4 | G4 |
| Example 6 | 6 | 0.51 | 0.6 | 5 | G4 | G4 | G4 |
| Example 7 | 7 | 0.50 | 0.6 | 11 | G4 | G4 | G4 |
| Example 8 | 8 | 0.50 | 0.6 | 44 | G4 | G4 | G3 |
| Example 9 | 9 | 0.51 | 0.6 | 58 | G4 | G4 | G2 |
| Example 10 | 10 | 0.96 | 0.6 | 22 | G4 | G4 | G3 |
| Example 11 | 11 | 0.96 | 0.6 | 85 | G4 | G4 | G2 |
| Example 12 | 12 | 0.97 | 0.6 | 112 | G4 | G4 | G1 |
| Example 13 | 13 | 0.51 | 0.6 | 5 | G3 | G4 | G4 |
| Example 14 | 14 | 0.49 | 0.6 | 5 | G3 | G4 | G4 |
| Example 15 | 15 | 0.11 | 0.2 | 1 | G4 | G4 | G4 |
| Example 16 | 16 | 0.96 | 0.2 | 10 | G4 | G4 | G4 |
| Example 17 | 17 | 0.11 | 1.9 | 1 | G4 | G4 | G4 |
| Example 18 | 18 | 0.97 | 1.9 | 10 | G4 | G4 | G4 |
| Example 19 | 19 | 1.11 | 0.2 | 11 | G3 | G4 | G4 |
| Example 20 | 20 | 1.95 | 0.2 | 20 | G3 | G4 | G4 |
| Example 21 | 21 | 1.10 | 1.9 | 11 | G3 | G4 | G4 |
| Example 22 | 22 | 0.11 | 2.1 | 1 | G4 | G3 | G4 |
| Example 23 | 23 | 0.96 | 2.1 | 10 | G4 | G3 | G4 |
| Example 24 | 24 | 0.12 | 4.9 | 1 | G4 | G3 | G4 |
| Example 25 | 25 | 1.93 | 4.9 | 20 | G3 | G3 | G4 |
| Example 26 | 26 | 2.05 | 0.2 | 21 | G2 | G4 | G3 |
| Example 27 | 27 | 4.96 | 0.2 | 52 | G2 | G4 | G2 |
| Example 28 | 28 | 2.03 | 4.9 | 21 | G2 | G3 | G3 |
| Example 29 | 29 | 0.12 | 5.1 | 1 | G4 | G2 | G4 |
| Example 30 | 30 | 1.95 | 5.1 | 20 | G3 | G2 | G4 |
| Example 31 | 31 | 0.10 | 9.8 | 1 | G4 | G2 | G4 |
| Example 32 | 32 | 4.93 | 9.8 | 52 | G2 | G2 | G2 |
| Comparative Example 1 | 33 | 0.12 | 0.1 | 1 | G4 | G1 | G4 |
| Comparative Example 2 | 34 | 4.96 | 0.1 | 52 | G2 | G1 | G2 |
| Comparative Example 3 | 35 | 5.11 | 0.2 | 53 | G1 | G4 | G2 |
| Comparative Example 4 | 36 | 5.12 | 9.8 | 53 | G1 | G2 | G2 |
| Comparative Example 5 | 37 | 0.11 | 10.2 | 1 | G4 | G1 | G4 |
| Comparative Example 6 | 38 | 4.95 | 10.3 | 52 | G2 | G1 | G2 |
| Comparative Example 7 | 39 | 0.09 | 0.2 | 1 | G4 | G1 | G4 |
| Comparative Example 8 | 40 | 0.08 | 9.8 | 1 | G4 | G1 | G4 |

**Table 5**

| | Resin composition | Content of titanium element Ct(mass%) | Content of zinc element Cz(ppm) | Content of mercury element(ppm) | Impact resistance | Hiding property | Recycling property |
|---|---|---|---|---|---|---|---|
| Example 33 | 41 | 0.5 | 0.6 | 5 | G4 | G4 | G4 |
| Example 34 | 42 | 0.12 | 0.3 | 1 | G4 | G4 | G4 |
| Example 35 | 43 | 0.95 | 0.3 | 10 | G4 | G4 | G4 |
| Example 36 | 44 | 0.11 | 1.9 | 1 | G4 | G4 | G4 |
| Example 37 | 45 | 0.97 | 1.9 | 10 | G4 | G4 | G4 |
| Example 38 | 46 | 1.12 | 0.3 | 11 | G3 | G4 | G4 |
| Example 39 | 47 | 1.93 | 0.3 | 20 | G3 | G4 | G4 |
| Example 40 | 48 | 1.11 | 1.9 | 11 | G3 | G4 | G4 |
| Example 41 | 49 | 0.13 | 2.1 | 1 | G4 | G3 | G4 |
| Example 42 | 50 | 0.95 | 2.1 | 10 | G4 | G3 | G4 |
| Example 43 | 51 | 0.12 | 4.9 | 1 | G4 | G3 | G4 |
| Example 44 | 52 | 1.95 | 4.9 | 20 | G3 | G3 | G4 |
| Example 45 | 53 | 2.04 | 0.3 | 21 | G2 | G4 | G3 |
| Example 46 | 54 | 4.96 | 0.3 | 52 | G2 | G4 | G2 |
| Example 47 | 55 | 2.05 | 4.9 | 21 | G2 | G3 | G3 |
| Example 48 | 56 | 0.13 | 5.1 | 1 | G4 | G2 | G4 |
| Example 49 | 57 | 1.94 | 5.1 | 20 | G3 | G2 | G4 |
| Example 50 | 58 | 0.12 | 9.7 | 1 | G4 | G2 | G4 |
| Example 51 | 59 | 4.97 | 9.7 | 52 | G2 | G2 | G2 |
| Comparative Example 9 | 60 | 0.11 | 0.1 | 1 | G4 | G1 | G4 |
| Comparative Example 10 | 61 | 4.95 | 0.1 | 52 | G2 | G1 | G2 |
| Comparative Example 11 | 62 | 5.11 | 0.2 | 53 | G1 | G3 | G2 |
| Comparative Example 12 | 63 | 5.13 | 9.7 | 53 | G1 | G2 | G2 |
| Comparative Example 13 | 64 | 0.11 | 10.2 | 1 | G4 | G1 | G4 |
| Comparative Example 14 | 65 | 4.96 | 10.2 | 52 | G2 | G1 | G2 |
| Comparative Example 15 | 66 | 0.08 | 0.2 | 1 | G4 | G1 | G4 |
| Comparative Example 16 | 67 | 0.08 | 9.8 | 1 | G4 | G1 | G4 |
| Example 52 | 68 | 0.51 | 0.6 | 5 | G4 | G4 | G4 |
| Example 53 | 69 | 0.12 | 0.3 | 1 | G4 | G4 | G4 |
| Example 54 | 70 | 0.95 | 0.3 | 10 | G4 | G4 | G4 |
| Example 55 | 71 | 0.12 | 1.9 | 1 | G4 | G4 | G4 |
| Example 56 | 72 | 0.96 | 1.9 | 10 | G4 | G4 | G4 |
| Example 57 | 73 | 1.11 | 0.3 | 11 | G3 | G4 | G4 |
| Example 58 | 74 | 1.94 | 0.3 | 20 | G3 | G4 | G4 |
| Example 59 | 75 | 1.12 | 1.9 | 11 | G3 | G4 | G4 |
| Example 60 | 76 | 0.1 | 2.1 | 1 | G4 | G3 | G4 |
| Example 61 | 77 | 0.94 | 2.1 | 10 | G4 | G3 | G4 |
| Example 62 | 78 | 0.12 | 4.9 | 1 | G4 | G3 | G4 |
| Example 63 | 79 | 1.92 | 4.9 | 20 | G3 | G3 | G4 |

**Table 6**

| | Resin composition | Content of titanium element Ct(mass%) | Content of zinc element Cz(ppm) | Content of mercury element(ppm) | Impact resistance | Hiding property | Recycling property |
|---|---|---|---|---|---|---|---|
| Example 64 | 80 | 2.06 | 0.3 | 21 | G2 | G4 | G3 |
| Example 65 | 81 | 4.96 | 0.3 | 52 | G2 | G4 | G2 |
| Example 66 | 82 | 2.06 | 4.9 | 21 | G2 | G3 | G3 |
| Example 67 | 83 | 0.11 | 5.1 | 1 | G4 | G2 | G4 |
| Example 68 | 84 | 1.94 | 5.1 | 20 | G3 | G2 | G4 |
| Example 69 | 85 | 0.12 | 9.7 | 1 | G4 | G2 | G4 |
| Example 70 | 86 | 4.92 | 9.7 | 52 | G2 | G2 | G2 |
| Example 71 | 95 | 0.53 | 0.1 | 1 | G4 | G3 | G4 |
| Comparative Example 17 | 87 | 0.11 | 0.1 | 1 | G4 | G1 | G4 |
| Comparative Example 18 | 88 | 4.95 | 0.1 | 52 | G2 | G1 | G2 |
| Comparative Example 19 | 89 | 5.11 | 0.2 | 53 | G1 | G3 | G2 |
| Comparative Example 20 | 90 | 5.13 | 9.7 | 53 | G1 | G2 | G2 |
| Comparative Example 21 | 91 | 0.12 | 10.2 | 1 | G4 | G1 | G4 |
| Comparative Example 22 | 92 | 4.93 | 10.2 | 52 | G2 | G1 | G2 |
| Comparative Example 23 | 93 | 0.08 | 0.2 | 1 | G4 | G1 | G4 |
| Comparative Example 24 | 94 | 0.08 | 9.8 | 1 | G4 | G1 | G4 |

From the results, it can be understood that with respect to evaluation of impact resistance and hiding property, fairly good results in the present Example may be obtained, compared to Comparative Examples.

In the present Examples, by using an example in which the amount of mercury element is reduced, it can be understood that with respect to evaluation of recycling property, fairly good results may be obtained.

## Claims

1. A resin composition, comprising:
a polycarbonate resin;
a titanium compound; and
a zinc compound,
wherein a content Ct of the titanium element derived from the titanium compound is from 0.1% by mass to 5% by mass based on the total resin composition, and
a content Cz of the zinc element derived from the zinc compound is from 0.2 ppm to 10 ppm based on the total resin composition.

2. The resin composition according to claim 1,
wherein a content of mercury is 100 ppm or less based on the total resin composition.

3. The resin composition according to claim 1 or 2,
wherein a weight average molecular weight of the polycarbonate resin is from 5000 to 300000.

4. The resin composition according to any one of claims 1 to 3,
wherein a content of the polycarbonate resin is from 50% by mass to 90% by mass based on the total resin composition.

5. The resin composition according to any one of claims 1 to 4,
wherein a volume average diameter of the titanium compound is from 0.1 µm to 0.5 µm.

6. The resin composition according to any one of claims 1 to 5,
wherein the titanium compound is titanium oxide.

7. The resin composition according to any one of claims 1 to 6,
wherein the zinc compound is a zinc salt of acid.

8. The resin composition according to any one of claims 1 to 7,
wherein the zinc salt of acid contains at least one of zinc phosphate and zinc stearate.

9. The resin composition according to any one of claims 1 to 8,
wherein the content Ct of the titanium element derived from the titanium compound is from 0.1% by mass to 2% by mass based on the total resin composition, and
the content Cz of the zinc element derived from the zinc compound is from 0.2 ppm to 5 ppm based on the total resin composition.

10. The resin composition according to any one of claims 1 to 9,
wherein the content Ct of the titanium element derived from the titanium compound is from 0.1 % by mass to 1% by mass based on the total resin composition, and
the content Cz of the zinc element derived from the zinc compound is from 0.2 ppm to 2 ppm based on the total resin composition.

11. A resin molded product, comprising:
the resin composition according to any one of claims 1 to 10.

## Patentansprüche

1. Harzzusammensetzung, umfassend
ein Polycarbonatharz;
eine Titanverbindung; und
eine Zinkverbindung,
wobei ein Gehalt Ct des Elements Titan, abgeleitet von der Titanverbindung, von 0,1 Massen-% bis 5 Massen-% ist, auf der Basis der Gesamtharzzusammensetzung, und
ein Gehalt Cz des Elements Zink, abgeleitet von der Zinkverbindung, von 0,2 ppm bis 10 ppm ist, auf der Basis der Gesamtharzzusammensetzung.

2. Harzzusammensetzung gemäß Anspruch 1,
wobei ein Gehalt an Quecksilber 100 ppm oder geringer ist, auf der Basis der Gesamtharzzusammensetzung.

3. Harzzusammensetzung gemäß Anspruch 1 oder 2,
wobei ein gewichtsgemitteltes Molekulargewicht des Polycarbonatharzes von 5000 bis 300000 ist.

4. Harzzusammensetzung gemäß irgendeinem der Ansprüche 1 bis 3, wobei ein Gehalt des Polycarbonatharzes von 50 Massen-% bis 90 Massen-% ist, auf der Basis der Gesamtharzzusammensetzung

5. Harzzusammensetzung gemäß irgendeinem der Ansprüche 1 bis 4, wobei ein volumengemittelter Durchmesser der Titanverbindung von 0,1 µm bis 0,5 µm ist.

6. Harzzusammensetzung gemäß irgendeinem der Ansprüche 1 bis 5, wobei die Titanverbindung Titanoxid ist.

7. Harzzusammensetzung gemäß irgendeinem der Ansprüche 1 bis 6, wobei die Zinkverbindung ein Zinksalz einer Säure ist.

8. Harzzusammensetzung gemäß irgendeinem der Ansprüche 1 bis 7,
wobei das Zinksalz einer Säure mindestens eines aus Zinkphosphat und Zinkstearat enthält.

9. Harzzusammensetzung gemäß irgendeinem der Ansprüche 1 bis 8,
wobei der Gehalt Ct des Elements Titan, abgeleitet von der Titanverbindung, von 0,1 1 Massen-% bis 2 Massen-% ist, auf der Basis der Gesamtharzzusammensetzung, und
der Gehalt Cz des Elements Zink, abgeleitet von der Zinkverbindung, von 0,2 ppm bis 5 ppm ist, auf der Basis der Gesamtharzzusammensetzung.

10. Harzzusammensetzung gemäß irgendeinem der Ansprüche 1 bis 9,
wobei der Gehalt Ct des Elements Titan, abgeleitet von der Titanverbindung, von 0,1 Massen-% bis 1 Massen-% ist, auf der Basis der Gesamtharzzusammensetzung, und
der Gehalt Cz des Elements Zink, abgeleitet von der Zinkverbindung, von 0,2 ppm bis 2 ppm ist, auf der Basis der Gesamtharzzusammensetzung.

11. Aus Harz gegossenes Produkt, umfassend
eine Harzzusammensetzung aus irgendeinem der Ansprüche 1 bis 10.

## Revendications

1. Une composition de résine, contenant :
une résine de polycarbonate ;
un composé de titane ; et
un composé de zinc,
où une teneur Ct de l'élément titane dérivée du composé de titane est de 0,1% en masse à 5% en masse en fonction de la composition de résine totale, et
une teneur Cz de l'élément zinc dérivée du composé de zinc est de 0,2 ppm à 10 ppm en fonction de la composition de résine totale.

2. La composition de résine selon la revendication 1,
où une teneur en mercure est de 100 ppm ou moins en fonction de la composition de résine totale.

3. La composition de résine selon la revendication 1 ou 2,
où une masse moléculaire moyenne en poids de la résine de polycarbonate est de 5 000 à 300 000.

4. La composition de résine selon l'une quelconque des revendications 1 à 3,
où une teneur de la résine de polycarbonate est de 50% en masse à 90% en masse en fonction de la composition de résine totale.

5. La composition de résine selon l'une quelconque des revendications 1 à 4, où un diamètre moyen en volume du composé de titane est de 0,1 µm à 0,5 µm.

6. La composition de résine selon l'une quelconque des revendications 1 à 5, où le composé de titane est oxyde de titane.

7. La composition de résine selon l'une quelconque des revendications 1 à 6, où le composé de zinc est un sel de zinc d'acide.

8. La composition de résine selon l'une quelconque des revendications 1 à 7,
où le sel de zinc d'acide contient au moins un élément parmi phosphate de zinc et stéarate de zinc.

9. La composition de résine selon l'une quelconque des revendications 1 à 8,
où la teneur Ct de l'élément titane dérivée du composé de titane est de 0,1 % en masse à 2% en masse en fonction de la composition de résine totale, et
la teneur Cz de l'élément zinc dérivée du composé de zinc est de 0,2 ppm à 5 ppm en fonction de la composition de résine totale.

10. La composition de résine selon l'une quelconque des revendications 1 à 9,
où la teneur Ct de l'élément titane dérivée du composé de titane est de 0,1 % en masse à 1% en masse en fonction de la composition de résine totale, et
la teneur Cz de l'élément zinc dérivée du composé de zinc est de 0,2 ppm à 2 ppm en fonction de la composition de résine totale.

11. Un produit moulé en résine comprenant :
la composition de résine selon l'une quelconque des revendications 1 à 10.
